# EUROPÄISCHE PATENTSCHRIFT

(11) **EP 1 883 767 B1**
(45) Veröffentlichungstag und Bekanntmachung des Hinweises auf die Patenterteilung: **29.04.2009**
(21) Anmeldenummer: 06753603.7
(22) Anmeldetag: 13.05.2006
(51) Int. Cl.: F21S 8/12, F21V 14/04

(54) **FAHRZEUGSCHEINWERFER**
VEHICLE HEADLIGHT
PHARE DE VEHICULE A MOTEUR

(30) Priorität: 24.05.2005 DE 102005023817
(43) Veröffentlichungstag der Anmeldung: 06.02.2008
(73) Patentinhaber: Bayerische Motoren Werke Aktiengesellschaft, 80809 München (DE)
(72) Erfinder: ERDL, Helmut, 83569 Vogtareuth (DE)
(74) Vertreter: Mayer-Martin, Christian
(86) Internationale Anmeldenummer: PCT/EP2006/004529
(87) Internationale Veröffentlichungsnummer: WO 2006/125542

(56) Entgegenhaltungen:
- DE-A1- 10 115 868
- DE-A1- 19 526 023
- DE-A1- 19 737 653

## Beschreibung

Die Erfindung betrifft einen Fahrzeugscheinwerfer mit einem Reflektor, der am Ort einer Lichtquelle mindestens einen Brennpunkt aufweist.

Beispielsweise aus der EP 0 900 694 A2 und aus der DE 100 40 302 A1 sind Fahrzeugscheinwerfer bekannt, die in üblicher Weise einen Reflektor aufweisen, in dessen Brennpunkt eine Lichtquelle angeordnet ist. Dabei ist dem Reflektor an seinem Reflektorrand in Hauptabstrahlrichtung ein etwa ringförmiger Lichtleiter vorgelagert, der als ein langgestrecktes Lichtauskoppelelement ausgebildet ist. Aus der DE 100 40 302 A1 ist dabei bekannt, einen zweiten Lichtleiter bzw. ein zweites Lichtauskoppelelement einem benachbarten Fahrzeugscheinwerfer zuzuordnen. Die Lichtleiter bzw. Lichtauskoppelelemente werden dabei von einer separaten Lichtquelle beleuchtet.

Nachteilig bei den bekannten Scheinwerfern ist, dass soweit es sich bei der dem Reflektor zugeordneten Lichtquelle um eine Gasentladungslampe, beispielsweise für Tagfahrlicht, handelt, die Farbe des Tagfahrlichtes sich von der Farbe des von einer Glühlampe gespeisten Positions- oder Standlichts des Lichtleiters unterscheidet.

Weiterhin ist aus der DE 101 15 868 A1 ein Scheinwerfer mit einem Reflektor und einer Lichtquelle zur Erzeugung eines Abblendlichts bekannt, der ein Lichtleitelement aufweist, in das Licht der Lichtquelle eingekoppelt und im Bereich eines Reflektors eines benachbarten Scheinwerfers ausgekoppelt wird, um an dem benachbarten Scheinwerfer eine weitere Lichtfunktion zu erzeugen. Zur Einkopplung von Licht der Lichtquelle des Lichtleitelementes ist bei dem bekannten Scheinwerfer dem ersten Reflektor in Richtung einer Hauptabstrahlrichtung ein Zusatzreflektor vorgelagert, durch den von der Lichtquelle ausgesandtes Licht im Wesentlichen quer zur Hauptstrahlabrichtung des Scheinwerfers reflektiert wird. Nachteilig bei dem letztgenannten Scheinwerfer ist, dass die Fläche des Zusatzreflektors relativ klein sein muss, um nicht in dem Strahlenbereich des ersten Reflektors eine unerwünschte Abschattung zu bilden. Verbunden mit der begrenzten Ausbildungsfreiheit des Zusatzreflektors ist somit eine begrenzte Effizienz der Lichteinkopplung in das Lichtleitelement gegeben. Eine Doppelringfunktion zweier benachbarter Scheinwerfer ist damit praktisch nur mit zwei aktiven Lichtquellen zu erzielen.

Weiterhin nachteilig bei dem bekannten Stand der Technik ist, dass zur Erzeugung einer weiteren Lichtfunktion, beispielsweise eines Fernlichtes, eine Lichtquelle mit einer zusätzlichen zweiten Wendel oder ein zusätzliches zentrales Lichtmodul mit einer zweiten Lichtquelle verwendet werden muss. Aus dem Dokument DE 197 37 653 ist ein Scheinwerfer mit den Merkmalen des Oberbegriffs des Anspruches 1 bekannt.

Aufgabe der vorliegenden Erfindung ist es daher, die bekannten Scheinwerfer so zu verbessern, dass zum einen auf zusätzliche Lichtquellen verzichtet werden kann, dass eine hohe Effizienz der Lichteinkopplung in das Lichtleitelement erreicht wird und dass bei geringem Aufwand eine weitere Lichtfunktion ermöglicht wird.

Diese Aufgabe wird in Verbindung mit dem Oberbegriff des Anspruches 1 dadurch gelöst, dass in einer zweiten Stellung des Spiegels zur Erzeugung einer weiteren Lichtfunktion eine der Lichtquelle in Abstrahlrichtung vorgelagerte, zentrale Linse freigegeben wird.

Dadurch, dass der Spiegel in seiner ersten Stellung im Bereich der optischen Achse der Lichtquelle vorgelagert ist, wird eine unerwünschte Abschattung im Randbereich des Reflektors und damit im Randbereich des Hauptstrahlbündels vermieden. Durch die zentrumsnahe Anordnung des Spiegels wirkt bei einem im Reflektorbereich hohlen Hauptstrahlbündel der Spiegel nicht störend und trägt zu einer erwünschten Abschattung unreflektierter Strahlen der Lichtquelle bei. In der ersten Stellung des Spiegels wird also der vordere Bereich des Reflektors relativ unbeeinflusst vom Spiegel zur Erzeugung eines Hauptstrahlbündels genutzt, während ein zentraler hinterer Bereich des Reflektors in Verbindung mit dem Spiegel der Lichteinkopplung in das Lichtleitelement dient. In der zweiten Stellung des Spiegels wird eine der Lichtquelle und dem Spiegel in Abstrahlrichtung vorgelagerte zentrale Linse von dem Spiegel freigegeben, so dass sowohl vom Reflektor reflektiertes Licht der Lichtquelle und direktes Licht der Lichtquelle über die zentrale Linse als Licht einer weiteren Lichtfunktion generiert werden. Eine zusätzliche bzw. eigenständige Lichtquelle des Lichtleitelementes und der weiteren Lichtfunktion kann eingespart werden. Der Reflektor und damit der Bauraum des Scheinwerfers muss sich durch die zusätzliche Funktion nicht vergrößern und kann relativ flach gehalten werden. Der Aufbau des Fahrzeugscheinwerfers ist damit relativ einfach, volumensparend und kostengünstig zu verwirklichen. Eine einfache Zugänglichkeit für den Lichtquellentausch bleibt erhalten.

Gemäß einer bevorzugten Ausführungsform der Erfindung ist der Spiegel als ein um eine Achse schwenkbarer Klappspiegel ausgebildet. Durch die Verwendung eines Klappspiegels, der aus einer ersten Stellung in seine zweite Stellung klappbar ist, kann der mechanische Aufwand zum Verschwenken des Spiegels relativ klein gehalten werden. Grundsätzlich ist aber auch ein seitliches Herausfahren des Spiegels aus dem Reflektorbereich möglich.

Nach einer weiteren bevorzugten Ausführungsform der Erfindung ist der Spiegel in seiner ersten Stellung gegenüber der in der Hauptabstrahlrichtung liegenden optischen Achse geneigt. Von einem ersten Teilbereich des Reflektors auf den Spiegel reflektiertes Licht wird dabei zur Lichteinkoppelfläche des Lichtleitelementes gelenkt und in das Lichtleitelement eingekoppelt. In einer zweiten Stellung des Spiegels ist dieser etwa parallel zur optischen Achse angeordnet und gibt die zentrale Linse, die er in seiner ersten Stellung verdeckt, frei, so dass von dem ersten Teilbereich des Reflektors Licht zur zentralen Linse gelenkt und als Licht einer weiteren Lichtfunktion abgestrahlt wird.

Dabei ist der Spiegel vorzugsweise als ein Planspiegel ausgebildet. Der Spiegel kann durch eine entsprechende Beschichtung als Kaltlichtspiegel ausgebildet sein, um dadurch die Temperaturlast am Lichtleitelement und am Spiegel zu reduzieren.

Der Spiegel ist relativ einfach und kostengünstig aufgebaut und trägt in Verbindung mit dem auf ihn abgestimmten zentralen Bereich des Reflektors zu einem effizienten Einkoppeln von Licht der Lichtquelle in das Lichtleitelement bei.

In der zweiten Stellung des Spiegels wird das Licht von dem ersten Teilbereich des Reflektors nicht von dem Spiegel reflektiert, sondern zu der freigegebenen zentralen Linse gelenkt. Nach einer weiteren bevorzugten Ausführungsform der Erfindung ist dem Reflektor in seinem in Hauptabstrahlrichtung liegenden vorderen Reflektorbereich ein Lichtleiter vorgelagert, der als ein Lichtauskoppelelement ausgebildet ist, das mindestens bereichsweise an den Rand des Reflektors benachbart ist. Auf Grund der günstigen Geometrie ist die Temperaturlast des Scheinwerfers relativ niedrig.

Der Lichtleiter bzw. das Lichtauskoppelelement weist eine dem Reflektor abgewandte Lichtaustrittsfläche und eine dem Reflektor zugewandte Lichteintrittsfläche auf. Der vordere Reflektor weist einen dritten Brennpunkt auf, der mit dem ersten Brennpunkt am Ort der Lichtquelle zusammenfällt. Dabei fokussiert der vordere Reflektorbereich das Licht der Lichtquelle zur Lichteintrittsfläche des Lichteinkoppelelementes hin in einer Brennlinie, die der Lichteintrittsfläche des Lichtleiters benachbart ist. Durch die Fokussierung des von der Lichtquelle abgewandten Lichtes in einer Brennlinie kann sehr effizient Licht der Lichtquelle in den Lichtleiter eingekoppelt werden. Dadurch wird es insbesondere möglich, den Lichtleiter zur Erzeugung eines Tagfahrlichts zu nutzen. Das Tagfahrlichtbündel ist dabei als ein hohles Hauptabstrahlbündel ausgebildet. Zur Erzeugung einer Fernlichtfunktion wird der Spiegel in seine zweite Stellung gebracht und mit Hilfe der zentralen Linse ein Fernlicht generiert.

Gemäß einer weiteren bevorzugten Ausführungsform der Erfindung ist der Reflektor von der Hauptabstrahlrichtung her gesehen kreisförmig und der Lichtleiter als ein Lichtring einer von dem Reflektor begrenzten Tagfahr- und Fernlichtkammer ausgebildet.

So kann mit einem Scheinwerfer und nur einer Lichtquelle sowohl Tagfahrlicht als auch Fernlicht erzeugt werden. Bei entsprechender Dimmung der Lichtquelle kann neben dem Fernlicht und Abblendlicht auch ein Standlicht generiert werden.

Nach einer weiteren bevorzugten Ausführungsform der Erfindung ist das Lichtleitelement mit einem Nachbarlichtleiter eines benachbarten Scheinwerfers verbunden. Der Nachbarlichtleiter ist dabei als ein Lichtauskoppelelement ausgebildet, das mindestens bereichsweise einem Rand eines Reflektors des benachbarten Scheinwerfers benachbart bzw. vorgelagert ist.

Der Nachbarlichtleiter des benachbarten Scheinwerfers benötigt keine eigene Lichtquelle und kann Licht in der gleichen Farbe abstrahlen wie der das Lichtleitelement aufweisende Fahrzeugscheinwerfer. Der Nachbarlichtleiter kann dabei als ein Lichtring einer von dem Reflektor des benachbarten Scheinwerfers begrenzten Abblendlichtkammer ausgebildet sein.

Die Reflektoren und Lichtleiter können grundsätzlich neben einer kreisförmigen Struktur auch eine andere, beispielsweise eine rechteckige Struktur, aufweisen.

Weitere Einzelheiten der Erfindung ergeben sich aus der nachfolgenden ausführlichen Beschreibung und den beigefügten Zeichnungen, in denen bevorzugte Ausführungsformen der Erfindung beispielhaft veranschaulicht sind.

In den Zeichnungen zeigen:

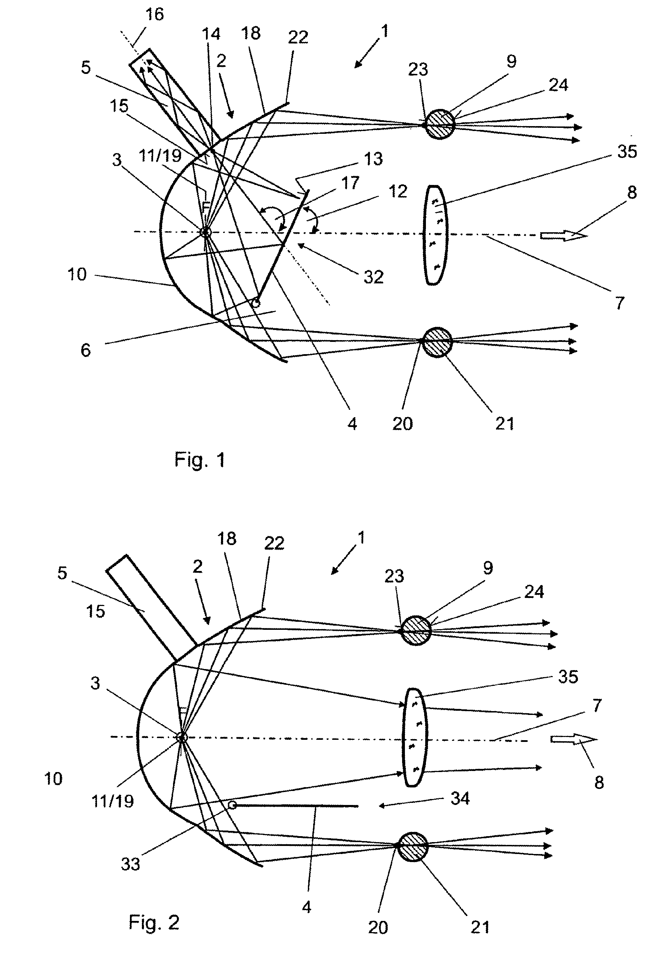

- Figur 1:: eine Seitenansicht eines Scheinwerfers mit Einkopplung von Licht einer Lichtquelle in ein Lichtleitelement über einen in einer ersten Stellung angeordneten Spiegel,
- Figur 2:: eine Seitenansicht des Scheinwerfers von Figur 1 mit dem in seine zweite Stellung weggeklappten Spiegel in der Licht über eine freigegebene zentrale Linse ausgekoppelt wird und

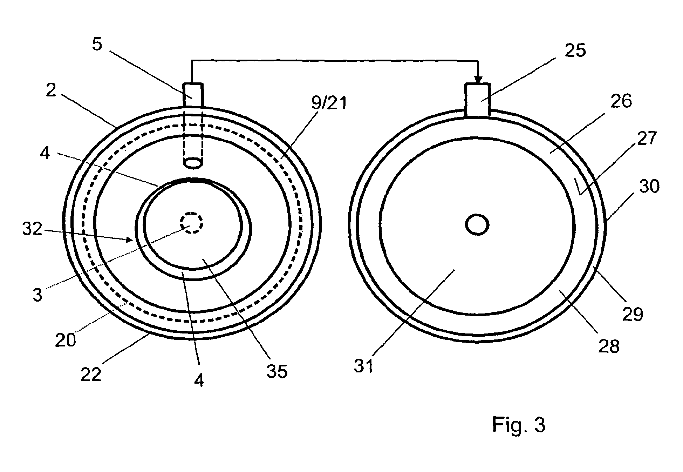

- Figur 3:: eine Vorderansicht • eines Fahrzeugscheinwerfers mit einem benachbarten Scheinwerferbenachbarten zweiten Scheinwerfer.

Ein Fahrzeugscheinwerfer 1 besteht im Wesentlichen aus einem Reflektor 2, einer Lichtquelle 3, einem Spiegel 4, einem Lichtleitelement 5 und einer zentralen Linse 35.

Der Reflektor 2 begrenzt eine Tagfahr- und Fernlichtkammer 6. Der Reflektor 2 weist eine optische Achse bzw. Längsachse 7 auf, die in einer Hauptabstrahlrichtung 8 liegt. In der Hauptabstrahlrichtung 8 ist dem Reflektor 2 ein Lichtleiter 9 vorgelagert.

Der Reflektor 2 weist zur Hauptabstrahlrichtung 8 hin einen zentralen ersten Teilbereich 10 mit einem ersten Brennpunkt 11 am Ort der Lichtquelle 3 auf. Im Bereich der optischen Achse 7 ist der Lichtquelle 3 in Hauptabstrahlrichtung 8 der Spiegel 4 vorgelagert. Dabei bildet der Spiegel 4 in seiner ersten Stellung 32 mit der optischen Achse 7 einen Winkel 12 und ist gegenüber der optischen Achse 7 so geneigt, dass seine dem ersten Teilbereich 10 zugewandte Reflektionsfläche 13 reflektiertes Licht der Lichtquelle 3 von dem ersten Teilbereich 10 des Reflektors 2 in einem zweiten Brennpunkt 14 bündelt, der einer Lichteinkoppelfläche 15 des Lichtleitelementes 5 benachbart ist. Der Spiegel 4 ist als ein Planspiegel ausgebildet. Das in dem zweiten Brennpunkt 14 gebündelte Licht wird über die Lichteinkoppelfläche 15 in das Lichtleitelement 5 eingekoppelt und durch Totalreflexion weitergeleitet. Das Lichtleitelement 5 weist eine Längsachse 16 auf, die mit der optischen Achse 7 des Reflektors einen stumpfen Winkel 17 bildet. Das Lichtelement 5 ist mit seiner Lichteinkoppelfläche 15 im Randbereich des ersten Teilbereiches 10 und damit benachbart zu dem sich anschließenden zweiten Teilbereich, der einen umlaufenden vorderen Reflektorbereich 18 bildet.

Der vordere Reflektorbereich 18 weist am Ort der Lichtquelle 3 einen dritten Brennpunkt 19 auf, der mit dem ersten Brennpunkt zusammenfällt und das Licht der Lichtquelle 3 in einer in Hauptabstrahlrichtung 8 liegenden Brennlinie 20 fokussiert. Der Lichtleiter 9 ist als ein Lichtauskoppelelement 21 ausgebildet, das einem Rand 22 des Reflektors 2 benachbart ist. Das Lichtauskoppelelement 25 weist entgegengesetzt zur Hauptabstrahlrichtung 8 eine Lichteintrittsfläche 23 auf, die der Brennlinie 20 benachbart ist und über die das Licht der Lichtquelle 3 in das Lichtauskoppelelement 21 einkoppelbar ist. Der Lichteintrittsfläche 23 in Hauptabstrahlrichtung 8 gegenüberliegend weist das Lichtauskoppelelement 21 eine Lichtaustrittsfläche 24 auf, über die das Licht der Lichtquelle 3 als ein ringförmiges Tagfahrlichtbündel ausgekoppelt wird.

Das Lichtleitelement 5 ist mit einem Lichteinkoppelelement 25 eines Nachbarlichtleiters 26 verbunden. Der Nachbarlichtleiter 26 weist eine Lichtauskoppelfläche 27 auf, über die das im Lichtleitelement 5 eingekoppelte Licht ausgekoppelt wird. In bekannter Weise kann der Nachbarlichtleiter 26 an seiner der Lichtauskoppelfläche 27 gegenüberliegenden Rückseite eine nicht dargestellte Reflexionsfläche aufweisen.

Das Lichtleitelement 5 ist mit dem Nachbarlichtleiter 26 bzw. dessen Lichteinkoppelelement 28 fest verbunden. Grundsätzlich ist es aber auch möglich, das Lichtleitelement 5 fest an den Reflektor 2 anzuordnen und über ein aufsteckbares Lichtleitelement 28 mit dem Lichteinkoppelelement 25 zu verbinden. Der Nachbarreflektor 29 begrenzt beispielsweise eine Abblendlichtkammer 31.

Der Spiegel 4 lässt sich aus seiner ersten Stellung 32 um eine Schwenkachse 33 in seine zweite Stellung klappen. In einer zweiten Stellung 34 ist der Spiegel 4 etwa parallel zur optischen Achse 7 angeordnet. In der zweiten Stellung wird der Lichtquelle 3 und dem Spiegel 4 in Hauptabstrahlrichtung 8 vorgelagerte zentrale Linse 35 in der weggeklappten zweiten Stellung 34 des Spiegels 4 wird das von dem ersten Teilbereich 10 des Reflektors 2 reflektierte Licht der Lichtquelle 3 zur zentralen Linse 35 gelenkt und über diese in Hauptabstrahlrichtung als Fernlicht abgestrahlt. In der ersten Stellung des Spiegels 4 wird bei eingeschaltetem Tagfahrlicht das Licht der Lichtquelle 3 über den als Lichtring ausgebildeten Lichtleiter 9 der Tagfahrlichtkammer 6 und über den Nachbarlichtleiter 26, der ebenfalls als Lichtring ausgebildet ist, in Verbindung mit dem Lichtleitelement 5 abgestrahlt. Standlicht kann über gedimmtes Taglicht erzeugt werden.

## Patentansprüche

1. Fahrzeugscheinwerfer mit einem Reflektor, der am Ort einer Lichtquelle mindestens einen Brennpunkt aufweist,
wobei der Lichtquelle (3) in Richtung einer Hauptabstrahlrichtung (8) ein verstellbarer Spiegel (4) im Bereich der optischen Achse (7) des Reflektors (2) vorgelagert ist, wobei
in einer ersten Stellung (32) des Spiegels (4) ein Teil des Lichtes der Lichtquelle (3) von einer der Hauptabstrahlrichtung (8) abgewandten Reflektionsfläche (13) des Spiegels (4) in einem zweiten, einer Lichteinkoppelfläche (15) eines Lichtleitelementes (5) benachbarten Brennpunkt (14) gebündelt und in das Lichtleitelement (5) eingekoppelt ist,
**dadurch gekennzeichnet, dass** in einer zweiten Stellung des Spiegels zur Erzeugung einer weiteren Lichtfunktion eine der Lichtquelle (3) in Hauptabstrahlrichtung (8) vorgelagerte, zentrale Linse (35) freigegeben wird.

2. Fahrzeugscheinwerfer nach Anspruch 1,
**dadurch gekennzeichnet,**
**dass** der Spiegel (4) als ein um eine Schwenkachse (33) schwenkbarer Klappspiegel ausgebildet ist.

3. Fahrzeugscheinwerfer nach Anspruch 1,
**dadurch gekennzeichnet,**
**dass** der Spiegel (4) in seiner ersten Stellung (32) gegenüber der in der Hauptabstrahlrichtung (8) liegenden optischen Achse (7) geneigt ist,
**dass** von einem ersten Teilbereich (10) des Reflektors (2) auf den Spiegel reflektiertes Licht zur Lichteinkoppelfläche (15) des Lichtleitelementes (5) gelenkt wird, und dass der Spiegel (4) in seiner zweiten Stellung (34) etwa parallel zur optischen Achse angeordnet ist, und dass von dem ersten Teilbereich (10) des Reflektors (2) Licht zur zentralen Linse (35) gelenkt wird.

4. Fahrzeugscheinwerfer nach einem der Ansprüche 1 bis 3,
**dadurch gekennzeichnet,**
**dass** der Spiegel (4) als ein Planspiegel ausgebildet ist.

5. Fahrzeugscheinwerfer nach einem der Ansprüche 1 bis 4,
**dadurch gekennzeichnet,**
**dass** dem Reflektor (2) in seinem in Hauptabstrahlrichtung (8) liegenden vorderen Reflektorbereich (18) ein Lichtleiter (9) vorgelagert ist, der als ein Lichtauskoppelelement (21) ausgebildet ist, das mindestens bereichsweise einem Rand (22) des Reflektors (2) benachbart ist, und der eine dem Reflektor (2) abgewandte Lichtaustrittsfläche (24) und eine dem Reflektor (2) zugewandte Lichteintrittsfläche (23) aufweist.

6. Fahrzeugscheinwerfer nach Anspruch 5,
**dadurch gekennzeichnet,**
**dass** der vordere Reflektorbereich (18) einen dritten Brennpunkt (19) aufweist, der mit dem ersten Brennpunkt (11) an der Lichtquelle (3) zusammenfällt, und
**dass** der vordere Reflektorbereich (18) das Licht der Lichtquelle (3) zur Lichteintrittsfläche (23) des Lichtauskoppelelementes (21) hin in einer Brennlinie (20) fokussiert.

7. Fahrzeugscheinwerfer nach Anspruch 5 oder 6,
**dadurch gekennzeichnet,**
**dass** der Lichtleiter (9) als ein Lichtring einer von dem Reflektor (2) begrenzten Tagfahr- und Fernlichtkammer (6) ausgebildet ist.

8. Fahrzeugscheinwerfer nach einem der Ansprüche 1 bis 7,
**dadurch gekennzeichnet,**
**dass** das Lichtleitelement (5) mit einem Nachbarlichtleiter (26) eines benachbarten Scheinwerfers verbunden ist, und dass der Nachbarlichtleiter (26) als ein Lichtauskoppelelement (21) ausgebildet ist, das mindestens bereichsweise einem Rand (30) eines Reflektors (29) des benachbarten Scheinwerfers benachbart ist.

9. Fahrzeugscheinwerfer nach Anspruch 8,
**dadurch gekennzeichnet,**
**dass** der Nachbarlichtleiter (26) als ein Lichtring einer von dem Reflektor (29) des benachbarten Scheinwerfers begrenzten Abblendfahrlichtkammer (31) ausgebildet ist.

## Claims

1. A vehicle headlight with a reflector, which, at the site of a light source, has at least one focal point, wherein an adjustable mirror (4) is placed in front of the light source (3) in the direction of a main beam direction (8) in the region of the optical axis (7) of the reflector (2), wherein in a first position (32) of the mirror (4), a part of the light of the light source (3) is focused by a reflection face (13) of the mirror (4) remote from the main beam direction (8) in a second focal point (14) adjacent to a light coupling face (15) of a light guide element (5) and is coupled into the light guide element (5), **characterised in that**, in a second position of the mirror, a central lens (35) which is placed in front of the light source (3) in the main beam direction (8) is cleared to generate a further light function.

2. A vehicle headlight according to claim 1, **characterised in that** the mirror (4) is configured as a folding mirror which can be pivoted about a pivot axis (33).

3. A vehicle headlight according to claim 1, **characterised in that** the mirror (4), in its first position (32), is inclined relative to the optical axis (7) located in the main beam direction (8), **in that** light reflected by a first part region (10) of the reflector (2) onto the mirror is directed to the light coupling face (15) of the light guide element (5), and **in that** the mirror (4), in its second position (34), is arranged approximately parallel to the optical axis, and **in that** light is directed to the central lens (35) from the first part region (10) of the reflector (2).

4. A vehicle headlight according to any one of claims 1 to 3, **characterised in that** the mirror (4) is configured as a planar mirror.

5. A vehicle headlight according to any one of claims 1 to 4, **characterised in that** a light guide (9) is located in front of the reflector (2) in its leading reflector region (18) located in the main beam direction (8), which light guide is configured as a light output element (21), which is adjacent to an edge (22) of the reflector (2), at least in regions, and which light guide has a light outlet face (24) remote from the reflector (2) and a light inlet face (23) facing the reflector (2).

6. A vehicle headlight according to claim 5, **characterised in that** the leading reflector region (18) has a third focal point (19), which coincides with the first focal point (11) at the light source (3), and **in that** the leading reflector region (18) focuses the light of the light source (3) toward the light inlet face (23) of the light output element (21) in a focal line (20).

7. A vehicle headlight according to claim 5 or 6, **characterised in that** the light guide (9) is configured as a light ring of a day driving and main beam compartment (6) limited by the reflector (2).

8. A vehicle headlight according to any one of claims 1 to 7, **characterised in that** the light guide element (5) is connected to an adjacent light guide (26) of an adjacent headlight, and **in that** the adjacent light guide (26) is configured as a light output element (21), which is adjacent, at least in regions, to an edge (30) of a reflector (29) of the adjacent headlight.

9. A vehicle headlight according to claim 8, **characterised in that** the adjacent light guide (26) is configured as a light ring of a dipped beam driving compartment (31) limited by the reflector (29) of the adjacent headlight.

## Revendications

1. Projecteur de véhicule automobile comportant un réflecteur ayant au moins un foyer à l'emplacement d'une source lumineuse, dans lequel la source lumineuse (3) est précédée dans la direction principale d'émission (8) d'un miroir réglable (4) situé dans la région de l'axe optique (7) du réflecteur (2), et
dans une première position (32) du miroir (4), une partie de la lumière de la source lumineuse (3) est concentrée par la surface de réflexion (13) du miroir (4) non tournée vers la direction principale d'émission (8) sur un second foyer (14) voisin de la surface de couplage de lumière (15) d'un élément guide de lumière (5), pour être injectée dans cet élément guide de lumière (5),
**caractérisé en ce que**
dans une seconde position du miroir on libère l'accès à une lentille centrale (35) en amont de la source lumineuse (3) et dans la direction principale d'émission (8), pour réaliser une autre fonction lumineuse.

2. Projecteur de véhicule automobile selon la revendication 1,
**caractérisé en ce que**
le miroir (4) est un miroir escamotable autour d'un axe de basculement (33).

3. Projecteur de véhicule automobile selon la revendication 1,
**caractérisé en ce que**
dans sa première position (32), le miroir (4) est incliné par rapport à l'axe optique (7) situé dans la direction principale d'émission (8) du faisceau, et la lumière réfléchie par la première zone partielle (10) du réflecteur (2) sur le miroir est dirigée vers la surface d'injection de lumière (15) de l'élément guide de lumière (5), et
dans sa seconde position (34), le miroir (4) est sensiblement parallèle à l'axe optique, et la lumière de la première zone partielle (10) du réflecteur (2) est dirigée vers la lentille centrale (35).

4. Projecteur de véhicule automobile selon les revendications 1 à 3,
**caractérisé en ce que**
le miroir (4) est plan.

5. Projecteur de véhicule automobile selon les revendications 1 à 4,
**caractérisé en ce que**
la zone avant (18) du réflecteur (2), selon sa direction principale d'émission (8) est précédée d'un guide de lumière (9) sous la forme d'un élément de découplage de lumière (21) voisin, au moins par zone, du bord (22) du réflecteur (2) et ayant une surface de sortie de lumière (24) non tournée vers le réflecteur (2) et une surface de sortie de lumière (23) tournée vers le réflecteur (2).

6. Projecteur de véhicule automobile selon la revendication 5,
**caractérisé en ce que**
la zone avant (18) du réflecteur a un troisième foyer (19) qui coïncide avec le premier foyer (11) de la source lumineuse (3), et
la zone avant (18) du réflecteur focalise la lumière de la source lumineuse (3) sur la surface d'entrée de lumière (23) de l'élément de découplage de lumière (21) suivant une ligne focale (20).

7. Projecteur de véhicule automobile selon la revendication 5 ou 6,
**caractérisé en ce que**
le guide de lumière (9) est en forme d'anneau lumineux d'une chambre d'éclairage diurne et de feux à longue portée, délimitée par le réflecteur (2).

8. Projecteur de véhicule automobile selon les revendications 1 à 7,
**caractérisé en ce que**
l'élément guide de lumière (5) est relié à un guide de lumière voisin (26) d'un projecteur avoisinant, et
le guide de lumière voisin (26) est un élément de découplage de lumière (21) voisin au moins par zone du bord (30) d'un réflecteur (29) du projecteur avoisinant.

9. Projecteur de véhicule automobile selon la revendication 8,
**caractérisé en ce que**
le guide de lumière voisin (26) est un anneau lumineux d'une chambre de lumière de croisement (31) délimitée par le réflecteur (29) du projecteur voisin.
